# EUROPEAN PATENT SPECIFICATION

(11) **EP 2 114 593 B1**
(45) Date of publication and mention of the grant of the patent: **15.07.2015**
(21) Application number: 08719498.1
(22) Date of filing: 28.02.2008
(51) Int. Cl.: B22F 7/06, B23B 27/14, B23B 27/20, C22C 26/00, E21B 10/567, B22F 5/00

(54) **TOOL COMPONENT**
WERKZEUGKOMPONENTE
COMPOSANT D'OUTIL

(30) Priority: 28.02.2007 ZA 200701780
(43) Date of publication of application: 11.11.2009
(73) Proprietor: Element Six Abrasives S.A., 1255 Luxembourg (LU)
(72) Inventor: PRETORIUS, Cornelius Johannes, Co. Clare (IE); HARDEN, Peter Michael, Nuffield, 1559 Springs (ZA)
(74) Representative: Mitchell, Matthew Benedict David
(86) International application number: PCT/IB2008/050717
(87) International publication number: WO 2008/104946

(56) References cited:
- EP-A- 0 264 674
- WO-A-93/25795
- WO-A1-88/09826
- GB-A- 2 335 682
- US-A- 5 037 704

## Description

### BACKGROUND OF THE INVENTION

This invention relates to a tool component.

Ultra-hard abrasive cutting elements or tool components utilizing diamond compacts, also known as polycrystalline diamond (PCD), and cubic boron nitride compacts, also known as PCBN, are extensively used in drilling, milling, cutting and other such abrasive applications. The element or tool component will generally comprise a layer of PCD or PCBN bonded to a support, generally a cemented carbide support. The PCD or PCBN layer may present a sharp cutting edge or point or a cutting or abrasive surface.

PCD comprises a mass of diamond particles containing a substantial amount of direct diamond-to-diamond bonding. PCD will typically have a second phase containing a diamond catalyst/solvent such as cobalt, nickel, iron or an alloy containing one or more such metals. PCBN will generally also contain a bonding phase which is typically a cBN catalyst or contain such a catalyst. Examples of suitable bonding phases are aluminium, alkali metals, cobalt, nickel, tungsten and the like.

PCD cutting elements are widely used for machining a range of metals and alloys as well as wood composite materials. The automotive, aerospace and woodworking industries in particular use PCD to benefit from the higher levels of productivity, precision and consistency it provides. Aluminium alloys, bi-metals, copper alloys, carbon/graphite reinforced plastics and metal matrix composites are typical materials machined with PCD in the metalworking industry. Laminated flooring boards, cement boards, chipboard, particle board and plywood are examples of wood products in this class. PCD is also used as inserts for drill bodies in the oil drilling industry.

Failure of a cutting tool during machining is usually brought about by one or a combination of the following processes:
▪ By catastrophic fracture (sudden failure)
▪ By cumulative wear (progressive failure)
▪ By plastic deformation (sudden failure)

Plastic Deformation leading to shape changes is usually not a very significant factor in ultra-hard cutting tool materials, like PCD, which maintains its strength at elevated temperatures. The failure of a tool due to progressive wear is characterised by the development of wear features on the tool. Typical wear features include flank wear, crater wear, DOC (depth of cut) notch wear, and trailing edge notch wear. The width of the flank wear land (VB_{B}max) is a suitable tool wear measure and a predetermined value of VB_{B}max is regarded as a good tool life criteria [INTERNATIONAL STANDARD (ISO) 3685, 1993, Tool life testing with single point turning tools]. The wear modes causing the wear features (wear scars) in a particular application is generally dependent on the cutting tool microstructure, the machining conditions and the geometry of the cutting edge. Wear modes can include abrasive wear, wear by microfracture (chipping, spalling and cracking), adhesive wear (built-up edge formation) or tribochemical wear (diffusion wear and formation of new chemical compounds). A great amount of time and effort is normally spent on finding the optimum tool material, geometry and machining parameters.

The high hardness of diamond is responsible for its good wear characteristics of PCD, however, negatively affects its fracture or chip resistance. This low chip resistance of PCD could cause catastrophic fracture or wear by a micro-fracture wear mode while the tool stays in the break-in stage or early stage in use in certain application. In order to prevent catastrophic fracture, chamfers and hones are usually produced on the cutting edges in order to increase its strength.

The lower chip resistance of PCD compared to carbide has restricted its use to only finishing application. In roughing and severe interrupted applications (high feed rate and depth of cut), where the load on the cutting edge is higher, PCD can easily fracture causing the tool to fail pre-maturely. Carbide on the other hand wears quicker than PCD, but is more chip resistant. Unlike in finishing operations, dimensional tolerance is not so critical in roughing operation (VB_{B}max > 0.6) which means that tool wear is not the dominant factor, but rather chip resistance. Also, in less severe applications, like MDF (medium density fibre board) low SiAl-alloys and chipboard, the wear rate is generally lower, and carbide is therefore preferred as a result of a lower cost-to-performance ratio.

In addition to this, due to the high hardness of PCD processing cost can be high, making it even less attractive when compared to carbide. Ultra-hard cutting tool materials (Polycrystalline Diamond (PCD), Polycrystalline Cubic Boron Nitride (PCBN), Single Crystal Diamond etc.), produced by high-temperature-high-pressure (HPHT) synthesis, have to go through several processing steps before they can be used as inserts for cutting tools. These processing steps generally involve the following:
1) Removal of a metal cup, usually a tantalum or niobium or molybdenum cup, from the ultra hard abrasive surface and sides of the synthesised discs
2) Bulk removal of outer portion of ultra hard abrasive table to obtain preferred characteristics
3) Semi-finishing on the top surface
4) Polishing (finishing) on the top surface. Typically a polished PCD layer has a roughness of Ra = 0.01 µm as measured with a 90°, 3µm stylus. PCBN is generally not polished
5) Cutting a disc into segments. Both disc and cut segments are supplied into the market. Of all these processing steps, polishing is probably the most problematic due to the ultra hard nature of the abrasive material. Generally, a high quality surface finish of the abrasive layer is required in application to enhance its performance.

Another disadvantage of currently available PCD cutting tools is that they are not designed to machine ferrous materials. When machining cast irons for example, the cutting forces and thus the cutting temperature at the cutting edge are much higher compared to non-ferrous machining. Since PCD starts to graphitise around 700°C, it limits its use to lower cutting speeds when machining ferrous materials, rendering it un-economical in certain applications compared to carbide tools.

US 5,833,021 discloses a polycrystalline diamond cutter having a refractory coating applied to the polycrystalline diamond surface to increase the operational life of the cutter. The refractory layer has a thickness of 0.1 to 30 microns and is applied in a post-synthesis operation, e.g. plating or chemical or physical deposition.

US 6,779,951 discloses a polycrystalline diamond cutter in which a layer of molybdenum is applied to a surface of the polycrystalline diamond through another metal layer. The other metal layer may be niobium, tantalum, zirconium, tungsten and other similar such metals or alloys containing such metals. The layers are thick having a thickness of greater than 100 microns.

US 6,439,327 discloses a polycrystalline diamond cutter for a rotary drill in which a side surface of the cutter is provided with a metal layer high pressure bonded to the side surface of the polycrystalline diamond. An example of a suitable metal is molybdenum.

US 3,745,623 discloses the manufacture of PCD in a titanium or zirconium protective sheath, some of which is converted to carbide during manufacture. A thin layer of this titanium or zirconium sheath may be left on the PCD over the chip breaker face.
GB-A-2335682 is considered to be the prior art closest to the subject-matter of claim 1 and explicitly discloses a tool component comprising a layer of polycrystalline diamond having a working surface, a softer layer having a thickness of up to 100 microns and containing niobium, bonded to the working surface of the polycrystalline diamond layer along an interface, the niobium of the softer layer being in the form of the niobium carbide, wherein the layer of polycrystalline diamond has a second phase containing cobalt. The layer of niobium carbide is formed by a sintering process. Due to the high temperature and pressure conditions of the sintering process, this will result in a diffusion bond between the niobium and ultra hard polycrystalline material. GB-A-2335682 therefore implicitly discloses that niobium from the softer layer is present in the region of the layer of polycrystalline diamond adjacent the interface and that the softer layer also contains cobalt from said second phase of the polycrystalline diamond.

### SUMMARY OF THE INVENTION

The invention provides a tool component comprising a layer of polycrystalline diamond [12] having a working surface [16] and a softer layer [20] having a thickness of up to 100 microns and containing a metal selected from molybdenum, tantalum and niobium bonded to the working surface [16] of the polycrystalline diamond layer [12] along an interface, the metal of the softer layer [20] being in the form of combination of the metal carbide and the metal, and metal from the softer layer [20] being present in the region of the layer of polycrystalline diamond [12] adjacent the interface, wherein:
the layer of polycrystalline diamond [12] has a second phase containing a metal;
the softer layer [20] consists predominantly of the metal in the form of the carbide and a minor amount of the metal, in metal form, and metal from said second phase of the polycrystalline diamond; and
the softer layer [20] has a thickness of at least 50 microns.

The softer layer provides a layer softer than the polycrystalline diamond for the tool component. This softer layer is strongly bonded to the working surface of the polycrystalline diamond by virtue of the fact that some of the metal has diffused into the region of the polycrystalline diamond adjacent the interface with the softer layer and is present in this region of the polycrystalline diamond. Some of the metal, e.g. cobalt, present as a second phase in the polycrystalline diamond will be present in the softer layer. Thus, the bond between the softer layer and the polycrystalline diamond is, in essence, a diffusion bond. Such a bond may be produced, for example, during the manufacture of the polycrystalline diamond, i.e. the softer layer is created and bonded to the polycrystalline diamond *in situ* during such manufacture. Such a strong bond is not achievable using a post-synthesis coating or deposition method such as that described in US 5,883,021 where delamination of the softer carbide layer is likely to occur under severe conditions.

It has been found that the provision of a softer top layer to the diamond material improves the performance of the tool component in applications where chip resistance is a critical tool material requirement. Typical applications include milling, sawing and reaming of composites (including wood), aluminium-alloys, cast irons, titanium alloys, heat resistant superalloys (HRSA) and hardened steels. Another application where high chip resistance is required is in drilling for oil and gas. In this application the drill bit has to drill through various types of rock formations (with different properties) resulting in impact loading on the cutting edge. Bit whirl will also result in impact loading on the cutting edge. Certain turning applications may also require chip resistance. One such an application is the turning of hardened steels with PCBN. In this application a crater forms on the rake face of the tool resulting in a smaller wedge angle which in turn reduces the strength of the cutting edge. In the past industry has tried to compensate for this by applying a chamfer and a hone on the cutting edge and by doing so increased the wedge angle of the insert. Two other turning applications where chip resistance is required is the turning of titanium and heat resistant superalloys where there is a tendency for notches to form on the cutting edge. In the past industry has compensated for this by increasing the nose radius or by changing the approach angle of the insert.

The softer layer may extend across a portion of the working surface only or across the entire working surface.

The working surface of the polycrystalline diamond layer is preferably the top surface of such layer and intersects another surface of the layer defining a cutting point or edge at the intersection. The softer layer preferably extends from the cutting edge or point across at least a portion of the working surface.

It is essential to the invention that the softer layer has a thickness of up to 100 microns. It has been found that thicker layers such as those described in US patent no. 6,779,951 are not effective particularly in metal working and wood working applications. The softer layer has a thickness of at least 50 microns.

The softer layer bonded to the working surface of the polycrystalline diamond layer in the tool component of the invention may be produced *in situ* in the manufacture of the tool component. In such a method, the components for producing the polycrystalline diamond layer are placed in a metal cup or capsule which is then subjected to the conditions of elevated temperature and pressure required to produce the polycrystalline diamond. Some of this metal cup or capsule adheres to and bonds to the outer surface of the polycrystalline diamond during manufacture. As the metal is a carbide former, some of carbide formation will occur, particularly in the region in contact with the diamond. After recovery of the polycrystalline diamond from the high temperature/high pressure apparatus, any excess metal and/or carbide from the cup is removed, e.g. by grinding, leaving a softer layer having a thickness of up to 100 microns. Some of the metal from the cup or capsule will diffuse into the polycrystalline diamond, during manufacture. Similarly, some metal from the second phase of the polycrystalline diamond, e.g. cobalt, will diffuse into the carbide-containing layer.

The working surface of the diamond layer may be smooth, polished or rough or irregular. When the working surface is rough or irregular, such may be that resulting from subjecting the working surface to a sandblasting or similar process.

The top, exposed surface of the softer layer may be polished. Polishing the softer layer is obviously considerably easier than polishing a surface of the polycrystalline diamond layer.

The layer of polycrystalline diamond is preferably bonded to a support or substrate, generally along a surface opposite to that of the working surface. The support or substrate is preferably made of cemented carbide. The carbide is preferably tungsten carbide, tantalum carbide, titanium carbide or niobium carbide. Ultra-fine carbide is preferably used in making the cemented carbide by methods known in the art.

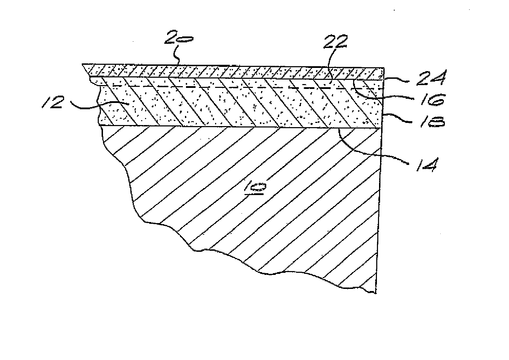

### BRIEF DESCRIPTION OF THE DRAWING

The drawing is a sectional side view of a portion of an embodiment of a tool component of the invention.

### DESCRIPTION OF PREFERRED EMBODIMENTS

The invention thus provides a tool component with improved performance in applications where chip resistance is a critical tool material requirement. Other advantages which flow from the nature of the softer layer and its strong bond with the polycrystalline diamond layer are:

A softer layer bonded to the harder abrasive layer results in a self-rounding or self-honing effect of the cutting edge in the initial stages of wear. This in turn will increase the strength of the cutting edge and reduce the break-in wear stage. The degree of rounding can be controlled by either increasing or decreasing the hardness of the softer layer. The material of the layer will also fill the pores and pits at the edge of the polycrystalline diamond layer resulting in less wear initiation sites. After the initial rounding process, the softer top layer can wear into the shape of a chip breaker.

A polished softer top layer will result in fewer flaws on the working surface as compared to prior art polycrystalline diamond products. The softer layer will also deform quickly to provide a stronger more rounded edge during the initial stages of cutting. Metal layers will generally also have a higher fracture toughness as compared to polycrystalline diamond. A less aggressive polishing method will result in lower stresses in the polycrystalline diamond surface. All these factors will reduce the frequency and severity of spalling, chipping and cracking, particularly in interrupted and/or impact machining of substrates.

An embodiment of the invention will now be described with reference to the accompanying drawing which illustrates the cutting edge portion of a tool component. Referring to this drawing, a tool component comprises a cemented carbide substrate 10 to which is bonded a layer of polycrystalline diamond 12 along interface 14. The layer of polycrystalline diamond 12 has an upper surface 16 which is the working surface of the tool component. The surface 16 intersects side surface 18 along a line 24 which defines a cutting edge for the tool component.

A softer layer 20 is bonded to the working surface 16. This softer layer 20 extends to the cutting edge 24. The softer layer 20 contains a combination of a metal selected from molybdenum, niobium and tantalum, as a metal, and a carbide thereof. Some of this metal from the layer 20 will be present in the region 22 in the polycrystalline diamond layer indicated by the dotted lines. Some metal from the polycrystalline diamond layer 12 will be present in the softer layer 20. Thus, a diffusion bond exists between the softer layer 20 and the polycrystalline diamond layer 12.

Examples of the invention will now be described.

### Example 1

A mass of diamond particles was placed on a surface of a cemented carbide substrate having cobalt as the binder phase. This unbonded mass was placed in a molybdenum capsule and this capsule placed in the reaction zone of a conventional high pressure/high temperature apparatus. The contents of the capsule were subjected to a temperature of about 1400°C and a pressure of about 5 GPa. These conditions were maintained for a time sufficient to produce a layer of polycrystalline diamond having a surface bonded to the cemented carbide substrate and an opposite exposed surface. The layer of polycrystalline diamond had a second phase containing cobalt.

The capsule was removed from the reaction zone. A layer of molybdenum/molybdenum carbide was bonded to the outer surface of the polycrystalline diamond. The outer regions of this layer of molybdenum/molybdenum carbide were removed by grinding leaving a thin layer of a material softer than the polycrystalline diamond bonded to one of the major surfaces of the layer of polycrystalline diamond.

The softer layer had a thickness of 100 microns. Analysis using EDS showed that this softer layer consisted predominantly of molybdenum carbide and a minor amount of molybdenum metal and cobalt from the cemented carbide substrate. The region of the polycrystalline diamond adjacent the interface with the softer layer was found to contain molybdenum, using the same EDS analysis. The bond between the softer layer and the polycrystalline diamond layer was strong. A plurality of cutting tool components were produced from the carbide supported polycrystalline diamond, such cutting tool inserts having a structure as illustrated by the accompanying drawing. These cutting tool components were found in tests to be effective in wood working and metal working applications. No delamination of the softer layers occurred.

### Example 2

A carbide supported polycrystalline diamond product comprising a layer of polycrystalline diamond bonded to a cemented carbide substrate and having a softer layer consisting predominantly of niobium carbide and a minor amount of niobium, as metal, and cobalt from the polycrystalline diamond was produced in the same manner as in Example 1, save that a niobium capsule was used instead of the molybdenum capsule. A minor amount of niobium was found to be present in the region of the polycrystalline diamond adjacent the interface with the softer layer. The thickness of the softer layer was 100 microns. From this product a plurality of tool components, each having a structure illustrated by the drawing and suitable for drilling applications were produced.

## Claims

1. A tool component comprising a layer of polycrystalline diamond [12] having a working surface [16] and a softer layer [20] having a thickness of up to 100 microns and containing a metal selected from molybdenum, tantalum and niobium bonded to the working surface [16] of the polycrystalline diamond layer [12] along an interface, the metal of the softer layer [20] being in the form of a combination of the metal carbide and the metal, and metal from the softer layer [20] being present in the region of the layer of polycrystalline diamond [12] adjacent the interface, wherein:
the layer of polycrystalline diamond [12] has a second phase containing a metal;
the softer layer [20] consists predominantly of the metal in the form of the carbide and a minor amount of the metal, in metal form, and metal from said second phase of the polycrystalline diamond; and
the softer layer [20] has a thickness of at least 50 microns.

2. A tool component according to claim 1 wherein the softer layer [20] covers a portion of the working surface [16] only.

3. A tool component according to claim 1 wherein the softer layer [20] covers the entire working surface [16].

4. A tool component according to any one of the preceding claims wherein the working surface [16] is a top surface of the layer of polycrystalline diamond [12] which intersects a side surface [18] defining a cutting edge [24] for the tool component at the intersection.

5. A tool component according to claim 4 wherein the softer layer [20] extends from the cutting edge [24] across at least a portion of the working surface [16].

6. A tool component according to any one of the preceding claims wherein the layer of polycrystalline diamond [12] is bonded to a substrate [10].

7. A tool component according to any one of the preceding claims wherein the substrate [10] is a cemented carbide substrate.

## Patentansprüche

1. Werkzeugteil, das eine polykristalline Diamantschicht [12], die eine Arbeitsfläche [16] aufweist und eine weichere Schicht [20] umfasst, die eine Schichtdicke von bis zu 100 Mikrometern aufweist und Metall ausgewählt aus Molybdän, Tantal und Niob enthält, das an die Arbeitsfläche [16] der polykristallinen Diamantschicht [12] entlang einer Grenzfläche gebunden ist, wobei das Metall der weicheren Schicht [20] in Form einer Kombination des Metallcarbids und des Metalls vorliegt, und Metall aus der weicheren Schicht [20] in dem an die Grenzfläche angrenzenden Bereich der polykristallinen Diamantschicht [12] vorliegt, wobei
die polykristalline Diamantschicht [12] eine zweite Phase aufweist, die Metall enthält,
die weichere Schicht [20] überwiegend aus dem Metall in der Form des Carbids und einer geringen Menge des Metalls in Metallform und Metall aus der zweiten Phase der polykristallinen Diamantschicht besteht, und
die weichere Schicht [20] eine Schichtdicke von mindestens 50 Mikrometern aufweist.

2. Werkzeugteil nach Anspruch 1, bei dem die weichere Schicht [20] nur einen Teil der Arbeitsfläche [16] bedeckt.

3. Werkzeugteil nach Anspruch 1, bei dem die weichere Schicht [20] die gesamte Arbeitsfläche [16] bedeckt.

4. Werkzeugteil nach einem der vorhergehenden Ansprüche, bei dem die Arbeitsfläche [16] eine Deckfläche der polykristallinen Diamantschicht [12] ist, die eine Seitenfläche [18] schneidet, wodurch an der Schnittstelle eine Schnittkante [24] für das Werkzeugteil definiert wird.

5. Werkzeugteil nach Anspruch 4, bei dem die weichere Schicht [20] sich von der Schnittkante [24] über mindestens einen Teil der Arbeitsfläche [16] erstreckt.

6. Werkzeugteil nach einem der vorhergehenden Ansprüche, bei dem die polykristalline Diamantschicht [12] an ein Substrat [10] gebunden ist.

7. Werkzeugteil nach einem der vorhergehenden Ansprüche, bei dem das Substrat [10] ein Hartmetallsubstrat ist.

## Revendications

1. Composant d'outil comprenant une couche de diamant polycristallin (12) ayant une surface de travail (16) et une couche plus molle (20) ayant une épaisseur de 100 microns au plus et contenant un métal choisi parmi le molybdène, le tantale et le niobium liée à la surface de travail (16) de la couche de diamant polycristallin (12) le long d'une interface, le métal de la couche plus molle (20) se présentant sous la forme d'un mélange du carbure de métal et du métal, et le métal de la couche plus molle (20) se trouvant dans la région de la couche de diamant polycristallin (12) adjacente à l'interface, dans lequel :
la couche de diamant polycristallin (12) a une seconde phase contenant un métal ;
la couche plus molle (20) est constituée principalement du métal sous la forme du carbure et d'une faible quantité du métal, sous forme métallique, et du métal issu de ladite seconde phase du diamant polycristallin ; et la couche plus molle (20) a une épaisseur d'au moins 50 microns.

2. Composant d'outil selon la revendication 1 dans lequel la couche plus molle (20) couvre une partie de la surface de travail (16) seulement.

3. Composant d'outil selon la revendication 1 dans lequel la couche plus molle (20) couvre la totalité de la surface de travail (16).

4. Composant d'outil selon l'une quelconque des revendications précédentes dans lequel la surface de travail (16) est une surface supérieure de la couche de diamant polycristallin (12) qui intersecte une surface latérale (18) définissant un bord tranchant (24) pour le composant d'outil au niveau de l'intersection.

5. Composant d'outil selon la revendication 4 dans lequel la couche plus molle (20) s'étend à partir du bord tranchant (24) à travers au moins une partie de la surface de travail (16).

6. Composant d'outil selon l'une quelconque des revendications précédentes dans lequel la couche de diamant polycristallin (12) est liée à un substrat (10).

7. Composant d'outil selon l'une quelconque des revendications précédentes dans lequel le substrat (10) est un substrat de carbure cémenté.
